# EUROPEAN PATENT SPECIFICATION

(11) **EP 1 390 785 B1**
(45) Date of publication and mention of the grant of the patent: **02.02.2005**
(21) Application number: 01274267.2
(22) Date of filing: 02.11.2001
(51) Int. Cl.: G02B 6/16, G02B 6/44, H04B 10/18

(54) **OPTICAL CABLES AND METHODS OF REPAIRING DAMAGED OPTICAL CABLE INSTALLATIONS**
OPTISCHE KABEL UND VERFAHREN ZUR REPARATUR VON BESCHÄDIGTEN OPTISCHEN KABELINSTALLATIONEN.
CABLES OPTIQUES ET PROCEDES DE REPARATION D'INSTALLATIONS DE CABLES OPTIQUES ENDOMMAGEES

(30) Priority: 26.05.2001 GB 0112895
(43) Date of publication of application: 25.02.2004
(73) Proprietor: CCS Technology, Inc., Wilmington, DE 19803 (US)
(72) Inventor: WALLACE, Colin Graeme, Chester, CH2 3DF (GB)
(74) Representative: Epping, Hermann, Fischer
(86) International application number: PCT/EP2001/012700
(87) International publication number: WO 2002/097494

(56) References cited:
- WO-A-98/49586
- CHUNG H S ET AL: "320-GB/SWDM TRANSMISSION WITH 50-GHZ CHANNEL SPACING OVER 564 KM OFSHORT-PERIOD DISPERSION-MANAGED FIBER (PERFECT CABLE)" IEEE PHOTONICS TECHNOLOGY LETTERS, IEEE INC. NEW YORK, US, vol. 12, no. 10, October 2000 (2000-10), pages 1397-1399, XP000970145 ISSN: 1041-1135
- The 4th International Convention on Undersea Communications, SubOptic 2001 International Convention, Subsea Networks - Creating the Global Village, Proceedings, Kyoto, Japan, 20-24 May, 2001

## Description

This invention relates to optical cables and to the use of those cables in repairing damaged optical cable installations.

If the potential capacity of a large-scale optical cable installation is to be realised, it is necessary to manage (among other things) the chromatic dispersion that tends to broaden light pulses as they travel through a fibre. One satisfactory way of doing so is to construct the installation of different types of fibre whose lengths and dispersion characteristics (at least one positive and one negative) are chosen to ensure that the aggregate dispersion nowhere exceeds a value at which reliability of signal transmission would be compromised, and preferably such that the aggregate dispersion of a signal pulse over its whole path is close to zero. See exemplarily H.S. Chung et al., IEEE Photonics Technology Letters, vol. 12, no. 10, October 2004, p. 1397-1399 and WO 98 /49586.

In initial installation, this can be achieved by careful system design and dimensional control, preferably with splices between positive and negative dispersion fibres (which are more difficult than those between similar fibres) made at convenient sites, ideally indoors. In most cases, repair where a cable has been damaged can be made without too much difficulty by cutting out the damaged section and splicing in a similar length of new cable with the same dispersion characteristics: a little extra fibre length will be required to make the two splices per fibre required to re-establish connection, but this will normally be insignificant.

Problems can arise, however, where the circumstances of the damage preclude immediate direct replacement of the damaged cable length. For example, if a cable installed alongside a railway were to be damaged incidentally to a railway accident, or a cable anywhere in a terrorist incident, access to the immediate damage site might be denied for a number of weeks pending various kinds of investigation, and restoration of the cable on an acceptable timescale may demand that it is re-connected, either temporarily or permanently, by cutting at the nearest points to the damaged section to which access is permitted and splicing in a length of cable sufficient to by-pass the inaccessible zone by an available and satisfactory route, which might be several kilometres long: in this case, simply splicing in a cable with the same dispersion characteristics as the damaged cable may result in those characteristics being over-represented and the system unbalanced to the point at which its performance is degraded or in the extreme it fails completely. To give an idea of scale, an additional 6km of cable might introduce around 100ps/nm of additional dispersion (positive or negative, depending on the fibre type), which is enough to cause serious imbalance.

One aspect of the present invention is an optical cable, primarily intended for use in making a repair in circumstances of the kind described, comprising at least one optical fibre made up of sections of positive and negative dispersion *characterised in that* they are spliced together within the cable.

When the cable includes a plurality of fibres, preferably they are all made up of sections of positive and negative dispersion spliced together within the cable and preferably they all have substantially the same aggregate dispersion.

In an alternative to the invention, suitable for use when the damaged length of cable to be replaced is reasonably short, the aggregate dispersion of the or each fibre of the cable in the alternative to the invention is zero or close to it. In this case, the whole length of the cable will be inserted in place of the damaged section (or two or more cables in accordance with the alternative to the invention could be inserted if required), any length not required by the length of the route being coiled or otherwise placed in some convenient disposition.

Alternatively, if it is anticipated that the dispersion due to the removed length of damaged cable may not be negligible, the cable of the invention may comprise a main section with dispersion close to zero and at least one end section with uniform positive or negative dispersion (for maximum versatility, one of each at its opposite ends), preferably corresponding to that of one of the cable types present in the system in which the cable may be used. In this case, a length of the end section matching the dispersion of the removed cable section (an equal length, if the dispersion characteristics are the same) plus the whole of its main section would be inserted, the remainder of the said end section, and the whole of the other end section if present, being discarded, or if justified reserved for use elsewhere.

Preferably the fibres at the ends of the cable, and at any position where it may be intended to cut it, are of the same kind (either all with positive dispersion, or all with negative) in order to avoid the need to make splices between dis-similar fibres in the field.

The cable in accordance with the invention will not usually be longer than about 12 or at most about 15 km.

The invention includes a method of repairing a damaged optical cable comprising removing a relatively short damaged section and replacing it with the cable described and the use of the cable for this purpose.

The invention will be further described, by way of example, with reference to the accompanying drawings in which:
Figure 1 is a diagrammatic representation of a simple form of optical fibre cable alternative to the invention;
Figures 2 and 3 are corresponding representations of two preferred forms of optical fibre cable in accordance the invention; and
Figures 4 and 5 are corresponding representations of two other forms optical fibre cable in accordance of the invention.

For simplicity, the drawings show only the relevant property of parts of the cable, with a thick solid line representing a portion of cable in which the fibre, or each of the fibres, has positive dispersion and a double line a portion in which the fibre, or each of the fibres, has negative dispersion, and the structure of only one fibre will be described. It should be noted, however, that there will usually be more than one fibre, and that in such a case there is no necessity for the longitudinal distribution of dispersion characteristics to be exactly the same for all of the fibres, and on the contrary it may be considered preferable that they differ at least to the extent that splices in different fibres are staggered. It is usually desirable for all the fibre ends accessible at the ends of the cable, and at any intended cutting position, to be of the same kind.

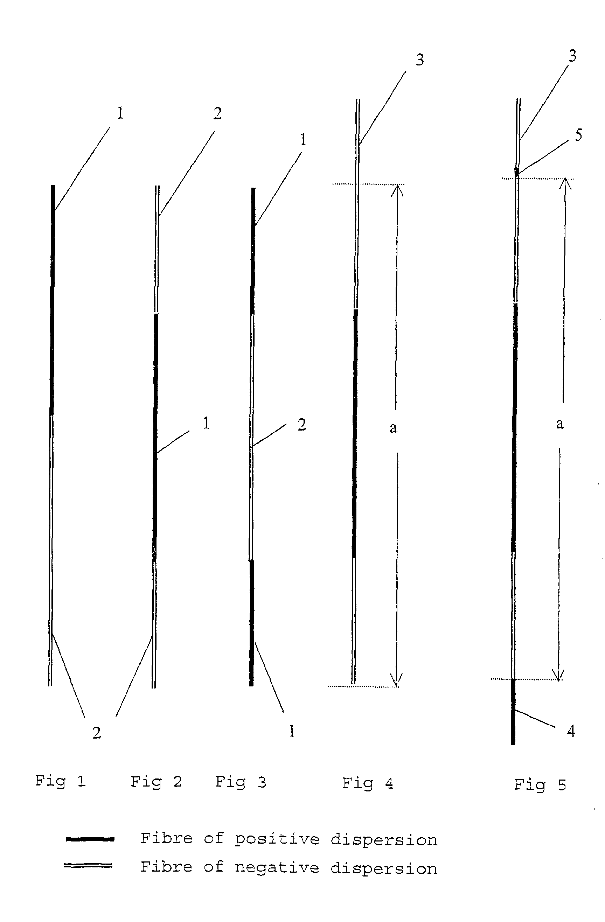

Figure 1 shows an alternative to the invention, in which a length of positive-dispersion fibre 1 and a length of negative-dispersion fibre 2 chosen to have equal and opposite dispersion are spliced together within the cable to achieve an aggregate dispersion from end to end of the cable. This is suitable for use as a whole when the dispersion due to the damaged length of cable removed can be neglected, or if this is not so it can be shortened by removing from the appropriate end a length having a dispersion approximately equal but opposite to that of the damaged cable section to be replaced; but (unless the damaged area includes a splice between positive-dispersion and negative-dispersion fibres, which is likely to be infrequent) it will require the formation of a splice between dis-similar fibres at one or other of its ends in the field.

In the preferred form of the invention shown in Figure 2, this need is avoided (at the cost of making two such splices in the factory instead of one) by using two lengths of negative-dispersion fibre 2, one at each end of the cable. Figure 3 shows the reverse of this arrangement, and the appropriate one of these cables is to be chosen depending whether the damaged cable exhibits negative or positive dispersion.

Figure 4 shows a development of the invention having a length a having zero aggregate dispersion (which may be identical with the cable represented by Figure 2) is extended by a length 3 having negative dispersion; this cable is intended for use when the damaged cable has negative dispersion and the length 3 is to be shortened so that its dispersion at least approximately equals that of the length of damaged cable removed (in most cases the dispersion per unit length of the old and new cables will be similar and it will be sufficient to shorten it to the same length as that of the removed cable length). Alternatively, since the end parts of the cable are alike, equivalent shortening could be effected at the opposite end of the cable.

It will be apparent that the cable represented by Figure 3 could be similarly extended for use in repairing a positive-dispersion cable where the dispersion of the removed cable length cannot be neglected.

Figure 5 represents a further development of the invention, providing a cable that can be used to repair either a positive-dispersion cable or a negative-dispersion one. Again the length a has zero aggregate dispersion and may be identical with the whole cable of Figure 2. This is extended at its upper end (as drawn) by a length 3 of negative-dispersion fibre, broadly as for Figure 4, and also at its lower end by a length 4 of positive-dispersion fibre; a further short length of positive-dispersion fibre 5 is inserted between the length a and the extension 3. To repair a damaged negative-dispersion cable, length 4 would be entirely cut off and discarded and length 3 shortened to obtain an aggregate dispersion about equal to that of the removed damaged section; or to repair a damaged positive-dispersion cable, length 3 would be removed together with part only of length 5 (in order to obtain a positive-dispersion end) and the length 4 shortened to obtain the appropriate aggregate dispersion to match that of the removed damaged section.

An alternative construction with all the dispersion characteristics reversed is also possible.

Especially in the forms of the invention shown in Figures 4 and 5 (and their reverse analogues) it may be desirable to mark the cable externally to indicate the positions of the splices and/or other reference points, particularly the end or ends of the length **a**.

## Claims

1. An optical cable comprising at least one optical fibre made up of sections of positive and negative dispersion spliced together within the cable, in which the sections at the ends of the at least one optical fibre are of the same kind either all with positive dispersion or all with negative.

2. An optical cable as claimed in claim 1 including a plurality of fibres all made up of sections of positive and negative dispersion spliced together within the cable and all having substantially the same aggregate dispersion.

3. An optical cable as claimed in claim 1 or claim 2 in which the aggregate dispersion of the or each fibre is zero or close to it.

4. An optical cable as claimed in claim 1 or claim 2 comprising a main section with dispersion close to zero and at least one end section with uniform positive or negative dispersion.

5. A method of repairing a damaged optical cable comprising removing a relatively short damaged section and replacing it using a cable comprising at least one optical fibre made up of sections of positive and negative dispersion spliced together within the cable, in which the sections at the ends of the at least one optical fibre are of the same kind either all with positive dispersion or all with negative.

6. A method as claimed in claim 5 replacing the damaged section with substantially the whole of a cable in which the aggregate dispersion of the or each fibre is zero or close to it

7. A method of repairing a damaged optical cable comprising removing a relatively short damaged section and preparing a replacing cable to replace it comprising at least one optical fibre made up of sections of positive and negative dispersion spliced together within the replacing cable, shortening one end of the replacing cable such that the replacing cable comprises substantially the whole of a main section and part of an end section of a cable, said fibre within the main section having a dispersion close to zero and said fibre within said part of an end section of a cable having uniform positive or negative dispersion and an aggregate dispersion substantially the same as that of the section removed, and replacing the relatively short damaged section with the such shortened replacing cable.

8. The use of a cable as claimed in any one of claims 1 to 4 to repair a damaged optical cable.

## Patentansprüche

1. Optisches Kabel, das mindestens eine optische Faser umfaßt, die aus Abschnitten mit positiver und negativer Dispersion gebildet ist, die innerhalb des Kabels zusammengespleißt sind, bei dem die Abschnitte an den Enden der mindestens einen optischen Faser von der gleichen Art sind und entweder alle eine positive oder alle eine negative Dispersion aufweisen.

2. Optisches Kabel nach Anspruch 1, das mehrere Fasern enthält, die alle aus Abschnitten mit positiver und negativer Dispersion gebildet sind, die innerhalb des Kabels zusammengespleißt sind und alle im wesentlichen die gleiche Gesamtdispersion aufweisen.

3. Optisches Kabel nach Anspruch 1 oder 2, bei dem die Gesamtdispersion der oder jeder Faser Null oder fast Null beträgt.

4. Optisches Kabel nach Anspruch 1 oder 2, das einen Hauptabschnitt mit einer Dispersion von fast Null und mindestens einen Endabschnitt mit einer gleichförmigen positiven oder negativen Dispersion aufweist.

5. Verfahren zum Reparieren eines beschädigten optischen Kabels, das folgendes umfaßt: Entfernen eines relativ kurzen beschädigten Abschnitts und sein Ersatz unter Verwendung eines Kabels, das folgendes umfaßt: mindestens eine optische Faser, die aus Abschnitten mit positiver und negativer Dispersion gebildet sind, die innerhalb des Kabels zusammengespleißt sind, wobei die Abschnitte an den Enden der mindestens einen optischen Faser von der gleichen Art sind und entweder alle eine positive Dispersion oder alle eine negative Dispersion aufweisen.

6. Verfahren nach Anspruch 5, das den beschädigten Abschnitt durch im wesentlichen ein ganzes Kabel ersetzt, bei dem die Gesamtdispersion der oder jeder Faser Null oder fast Null beträgt.

7. Verfahren zum Reparieren eines beschädigten optischen Kabels, das folgendes umfaßt: Entfernen eines relativ kurzen beschädigten Abschnitts und Herstellen eines ersetzenden Kabels, um es zu ersetzen, das folgendes umfaßt: mindestens eine optische Faser, die aus Abschnitten mit positiver und negativer Dispersion besteht, die innerhalb des ersetzenden Kabels zusammengespleißt sind, Kürzen eines Endes des ersetzenden Kabels, so daß das ersetzende Kabel folgendes umfaßt: im wesentlichen das Ganze eines Hauptabschnitts und Teil eines Endabschnitts eines Kabels, die Faser in dem Hauptabschnitt mit einer Dispersion, die fast Null beträgt, und die Faser in dem Teil eines Endabschnitts eines Kabels mit gleichförmiger positiver oder negativer Dispersion und einer Gesamtdispersion, die im wesentlichen gleich der des entfernten Abschnitts ist, und Ersetzen des relativ kurzen beschädigten Abschnitts durch das derart gekürzte ersetzende Kabel.

8. Verwendung eines Kabels nach einem der Ansprüche 1 bis 4 zum Reparieren eines beschädigten optischen Kabels.

## Revendications

1. Câble optique comprenant au moins une fibre optique constituée de tronçons ayant une dispersion positive et une dispersion négative, épissés les uns aux autres à l'intérieur du câble, dans lequel les tronçons aux extrémités de la ou des fibres sont du même type, tous à dispersion positive, ou tous à dispersion négative.

2. Câble optique selon la revendication 1, comprenant plusieurs fibres, qui toutes sont constituées de tronçons à dispersion positive et à dispersion négative, épissés les uns aux autres à l'intérieur du câble, et tous ayant essentiellement la même dispersion globale.

3. Câble optique selon la revendication 1 ou 2, dans lequel la dispersion globale de la fibre ou de chaque fibre est égale à zéro ou proche de zéro.

4. Câble optique selon la revendication 1 ou 2, comprenant un tronçon principal dont la dispersion est proche de zéro et au moins un tronçon terminal ayant une dispersion positive ou négative uniforme.

5. Procédé de réparation d'un câble optique endommagé, comprenant l'enlèvement d'un tronçon endommagé relativement court et son remplacement par utilisation d'un câble comprenant au moins une fibre optique constituée de tronçons à dispersion positive et à dispersion négative, épissés les uns aux autres à l'intérieur du câble, procédé dans lequel les tronçons, aux extrémités de la ou des fibres optiques, sont du même type, tous à dispersion positive ou tous à dispersion négative.

6. Procédé selon la revendication 5, consistant à remplacer le tronçon endommagé par essentiellement la totalité d'un câble dans lequel la dispersion globale de la ou de chaque fibre est égale à zéro ou est proche de zéro.

7. Procédé de réparation d'un câble optique endommagé, comprenant l'enlèvement d'un tronçon endommagé relativement court et la préparation d'un câble de remplacement destiné à le remplacer, comprenant au moins une fibre optique constituée de tronçons à dispersion positive et à dispersion négative, épissés les uns aux autres à l'intérieur du câble de remplacement, le raccourcissement d'une extrémité du câble de remplacement de façon que le câble de remplacement comprenne essentiellement la totalité d'un tronçon principal et une partie d'un tronçon terminal d'un câble, ladite fibre à l'intérieur dudit tronçon ayant une dispersion proche de zéro, et ladite fibre à l'intérieur de ladite partie d'un tronçon terminal d'un câble ayant une dispersion positive ou négative uniforme, et une dispersion globale essentiellement identique à celle du tronçon enlevé, et le remplacement du tronçon endommagé relativement court par ledit câble de remplacement raccourci.

8. Utilisation d'un câble selon l'une quelconque des revendications 1 à 4 pour réparer un câble optique endommagé.
